# FASCICULE DE BREVET EUROPEEN

(11) **EP 0 716 336 B1**
(45) Date de publication et mention de la délivrance du brevet: **06.08.2003**
(21) Numéro de dépôt: 95402723.1
(22) Date de dépôt: 04.12.1995
(51) Int. Cl.: G02F 1/313, G02B 6/122

(54) **Commutateur optique binaire compact**
Kompakter digitaler optischer Schalter
Compact digital optical switch

(30) Priorité: 08.12.1994 FR 9414773
(43) Date de publication de la demande: 12.06.1996
(73) Titulaire: ALCATEL, 75008 Paris (FR)
(72) Inventeur: Vinchant, Jean-François, F-91680 Bruyeres le Chatel (FR)
(74) Mandataire: Smith, Bradford Lee

(56) Documents cités:
- IEICE TRANSACTIONS ON COMMUNICATIONS, FEB. 1994, JAPAN, vol. E77-B, no. 2, ISSN 0916-8516, pages 204-208, XP000447112 OKAYAMA H ET AL: "8*8 Ti:LiNbO/sub 3/ waveguide digital optical switch matrix"
- IEE PROCEEDINGS J (OPTOELECTRONICS), OCT. 1993, UK, vol. 140, no. 5, ISSN 0267-3932, pages 301-307, XP000412792 VINCHANT J -F ET AL: "InP digital optical switch: key element for guided-wave photonic switching"
- ELECTRONICS LETTERS, 25 APRIL 1991, UK, vol. 27, no. 9, ISSN 0013-5194, pages 699-700, XP000186217 CAVAILLES J A ET AL: "First digital optical switch based on InP/GaInAsP double heterostructure waveguides"
- JOURNAL OF LIGHTWAVE TECHNOLOGY, FEB. 1993, USA, vol. 11, no. 2, ISSN 0733-8724, pages 379-387, XP000563340 OKAYAMA H ET AL: "Reduction of voltage-length product for Y-branch digital optical switch"
- IEICE TRANSACTIONS ON COMMUNICATIONS, SEPT. 1992, JAPAN, vol. E75-B, no. 9, ISSN 0916-8516, pages 886-892, XP000321324 TANAKA I ET AL: "Glass waveguide 1*N branching devices"

## Description

Le domaine de l'invention est celui de la commutation optique binaire. L'invention concerne un composant électro-optique de routage d'un signal optique entre une entrée et l'une des deux sorties, sous l'influence d'une tension électrique appliquée ou d'un courant électrique injecté. L'entrée et les deux sorties sont sur guides optiques ; aussi le commutateur optique binaire permet le routage de signaux optiques sans conversions photonique-électronique ou vice-versa.

Les avantages d'un commutateur optique binaire (connu de l'homme de l'art par l'acronyme DOS pour Digital Optical Switch en anglais) comprenant deux branches de sortie disposées en "Y" par rapport à une entrée unique sont connus, par exemple par la publication de YANAGAWA, H. et al., "Polarisation and Wavelength-insensitive guided wave optical switch with semiconductor Y junction", J. Lightwave Technology, v. 8, no. 8, pp. 1192-1197 (1990).

Notamment, un tel commutateur n'est pas très sensible ni à la longueur d'onde de la lumière guidée, ni à sa polarisation. Les commutations sont effectuées soit par injection de courant dans l'un des guides de sortie afin de changer son indice de réfraction, mais avec des temps de réponse supérieure à la nanoseconde ; soit par l'application d'une tension par une électrode placée le long des guides de sortie, ce qui permet d'effectuer des commutations plus rapides, autorisant des débits de quelques G Bit/s pour l'AMRT optique. L'homme de l'art connaît des exemples de commutateurs optiques binaires décrits ci-dessus, dans des multiples réalisations visant à optimiser telle ou telle performance : minimiser la tension ou le courant de commande à appliquer, réduire la taille hors tout du composant, minimiser la diaphonie (cross-talk) ou augmenter l'extinction dans la branche non utilisée, améliorer le temps de réponse du commutateur, simplifier et réduire les coûts de sa réalisation et de sa fabrication industrielle, ainsi que de son intégration dans une matrice de commutation, ... et cetera. Voir par exemple l'article de OKAYAMA, H. et al., "Reduction of voltage-length product for Y-branch Digital OpticalSwitch", J. Lightwave Technology, vol.11, no.2, pp. 379-387.

Dans une demande de brevet français antérieure n°93 10367 du 30 août 1993, la Demanderesse a décrit un tel commutateur en "Y" réalisé de préférence par la technique "MOCVD" sur substrat InP.

Cette demande de brevet concerne une géométrie spécifique de l'"Y", afin d'en tirer les conséquences les meilleures pour les performances optimales. En particulier, la région de transition est minimale en longueur ; et l'angle de bifurcation est choisi pour optimiser l'extinction de l'onde dans le guide qui n'est pas sélectionné, sans grever les performances et notamment sans introduire des pertes d'insertion indues. Ce commutateur connu permet d'obtenir des performances satisfaisantes, mais on souhaiterait en réduire son encombrement et notamment sa longueur hors tout.

Pour obtenir des performances optimales, la géométrie du commutateur décrit dans cette demande comprend un angle de bifurcation (par rapport au guide principal) de l'ordre de 1°. L'extinction totale dans la branche non sélectionnée demande alors une longueur hors tout de 2 à 3 mm, ce qui semble trop élevé, surtout pour des applications de commutation optique utilisant des matrices de commutateurs optiques en grand nombre (d'où le souci de leur taille).

Le commutateur décrit dans cette demande FR-93 10367 du 30 août 1993 présente d'autres avantages décisifs à conserver, à savoir, son insensibilité à la polarisation de la lumière guidée, et sa faible tension de commande.

Les commutateurs optiques binaires ont soit une entrée unique et deux guides optiques de sortie disposés en "Y" soit deux entrées et deux guides optiques de sortie disposés en "X". (voir Nelson, W.H. et al., "Large-angle 1.3 µm InP/InGaAsP digital optical switches with extinction ratios exceeding 20 dB", Proc. Optical Fiber Conference 1994, session TuM2, p53-54).

Dans le cas le plus simple, les guides de sortie sont identiques. La sélection du guide de sortie actif est effectuée soit par l'injection de courant électrique dans l'autre guide de sortie non sélectionné afin de diminuer son indice de réfraction ; soit par l'application d'un potentiel électrique sur le guide sélectionné, afin d'augmenter son indice de réfraction, par les effets optoélectroniques Pockels et/ou Kerr.

La géométrie du coupleur comprend des paramètres tels l'angle entre les guides de sortie, la longueur des électrodes, et la forme des guides. Ces paramètres sont choisis pour minimiser la puissance électrique dissipée, minimiser la diaphonie (ce qui veut dire l'apparence de puissance optique sur le guide non sélectionné), tout en minimisant les pertes d'insertion et les dimensions hors tout du composant. Les commutateurs optiques binaires de l'art antérieur sont décrits de façon plus détaillé dans le document de J.F. Vinchant et al., " InP digital optical switch, : key element for guided wave photonic switching", Proc. IEE, Vol.J.140, n°5, PP.301-307, (Oct. 1993).

Il est un but de l'invention de remédier aux inconvénients des commutateurs optiques connus du type décrit ci-dessus, et notamment d'optimiser simultanément l'ensemble des paramètres évoqués. Par exemple, il est un but de l'invention de réduire la taille hors tout du composant, tout en maintenant le plus faible taux de diaphonie, une faible dissipation électrique des électrodes de commande, et des pertes d'insertion aussi faibles que possible.

A ces fins, l'invention propose un Commutateur binaire optique, comprenant un guide optique dit d'entrée, et un premier et un deuxième guides optiques dits de sortie, lesdits guides mutuellement disposés selon une bifurcation ayant la forme de la lettre "Y", lesdits premier et deuxième guides de sortie chacun comprenant au moins une première partie disposée à une extrémité dudit guide d'entrée, et une deuxième partie disposée à une extrémité de ladite première partie ; lesdites première et deuxième parties étant couplées par une région de transition ; et des moyens pour l'application d'un signal électrique de commande qui commande une différence d'indice de réfraction entre lesdites premières parties respectives desdits premier et deuxième guides de sortie ; caractérisé en ce que les paramétres optogéométriques d'au moins l'un desdits deux guides optiques de sortie sont sélectionnés de façon à ce que ledit guide présente, dans un plan contenant lesdits guides de sortie, une largeur de mode de propagation guidée qui est plus faible dans ladite deuxième partie que la largeur de mode dans ladite première partie du guide respectif de sortie.

Selon une variante, le commutateur de l'invention comprend deux guides dits d'entrée et deux guides dits de sortie, disposés mutuellement selon la forme de la lettre "X".

Selon une autre caractéristique, ladite transition est réalisée entre ladite première partie ayant un indice de réfraction n₁, et ladite deuxième partie ayant un indice de réfraction n₂ > n₁. Selon une variante, ladite transition entre lesdites première et deuxième parties d'indices n₁,n₂ respectivement, est réalisée par juxtaposition bout à bout ("butt joint" en anglais).

Selon une caractéristique avantageuse, lesdites première et deuxième parties sont couplées via une transition adiabatique.

Selon un mode de réalisation particulière, ladite transition adiabatique est réalisée par une technique de gravure. Selon une variante avantageuse, cette technique consiste à graver à une profondeur plus importante dans la région de ladite deuxième partie que la profondeur de gravure dans la région de ladite première partie desdits guides de sortie.

Selon une caractéristique avantageuse, lesdites premières et deuxièmes parties ont respectivement des dimensions physiques transversales à la direction de propagation de lumière dans lesdits guides, dites hauteur et largeur, et en ce que ladite hauteur desdites premières parties est inférieure a ladite hauteur desdites deuxièmes parties. Selon une autre caractéristique avantageuse, ladite largeur des dites deuxièmes parties est inférieure à ladite largeur desdites premières parties.

Selon une autre réalisation particulière, ladite transition adiabatique est réalisée entre lesdites premières parties réalisées par une technique de ruban gravé, et lesdites deuxièmes parties réalisées par une technique de ruban enterré. Selon une variante, lesdites première et deuxième parties sont toutes deux réalisées par la technique de ruban enterré.

Selon une réalisation avantageuse, au moins lesdites premières parties sont réalisées en multiples puits quantiques (MQW en anglais pour multiple quantum wells).

L'invention propose également une matrice de commutation ou de routage photonique comprenant une pluralité de commutateurs DOS présentant l'une ou l'autre des caractéristiques évoquées ci-dessus.

Le commutateur optique binaire selon l'invention et ses différentes variantes possède les caractéristiques recherchées, à savoir : une faible taille hors tout, pouvant être inférieure au millimètre ; un taux d'extinction élevé dans la branche non sélectionnée ; et des faibles pertes d'insertion. De plus, ce commutateur selon l'invention conserve les caractéristiques des DOS classiques, à savoir une faible dissipation électrique des électrodes de commande qui commandent l'indice de réfraction sous l'électrode, soit par injection de courant, soit par l'application d'une tension de commande ; et une faible sensitivité à la polarisation et à la longueur d'onde de la lumière guidée.

Dans le cas où un matériau efficace est utilisé pour la réalisation des zones actives sous les électrodes, par exemple des puits quantiques, la faible taille des électrodes, de l'ordre de 100 µm de longueur par exemple, autorise le commutateur à fonctionner à des hauts débits (≥ 10 Gbits/s) avec une commande en tension.

D'autres caractéristiques et avantages de l'invention ressortiront de la description détaillée qui suit, avec ses dessins annexés dont :
- les figures 1 et 2 montrent en perspective et en plan respectivement, un DOS de l'art antérieur, connu par exemple par la demande de brevet FR-93 10367 du 30 août 1993 ;
- la figure 3 montre un exemple de réalisation d'un commutateur optique binaire selon l'invention ;
- la figure 4 montre un exemple de réalisation d'une transition adiabatique entre un guide de type ruban enterré et un guide de type ruban gravé, tel que décrit dans la demande de brevet FR-94 00886 du 27 janvier 1994 au nom de la Demanderesse, et pouvant servir dans la réalisation d'un commutateur selon l'invention
- les figures 5a à 5j montrent différentes étapes d'un procédé de réalisation d'une transition entre un guide de type ruban enterré et un guide de type ruban gravé, tel que décrit dans la demande de brevet FR-94 10502 du 31 aout 1994 au nom de la Demanderesse, et pouvant servir à réaliser une transition pour la réalisation d'un commutateur selon l'invention
- la figure 6 montre une matrice de commutation 4X4 constituée par une pluralité de commutateurs DOS selon l'invention (voir Fig 13, Vinchant et al. Proc. IEE vol.J140 n°5, p.306) ;
- la figure 7 montre une variante d'un commutateur DOS connu de l'art antérieur ayant la forme de la lettre "X" au lieu de la lettre "Y" (voir Nelson, W.H. et al., "Large-angle 1.3 µm InP/InGaAsP digital optical switches with extinction ratios exceeding 20 dB", Proc. Optical Fiber Conférence 1994, session TuM2, p53-54).

Les différentes figures sont données à titre d'exemples non limitatifs des réalisations d'un commutateur optique binaire selon l'invention et quelques unes de ses principales caractéristiques. Sur toutes les figures, les mêmes repères se réfèrent aux mêmes éléments. L'échelle des dessins n'est pas toujours respectée pour des raisons de clarté.

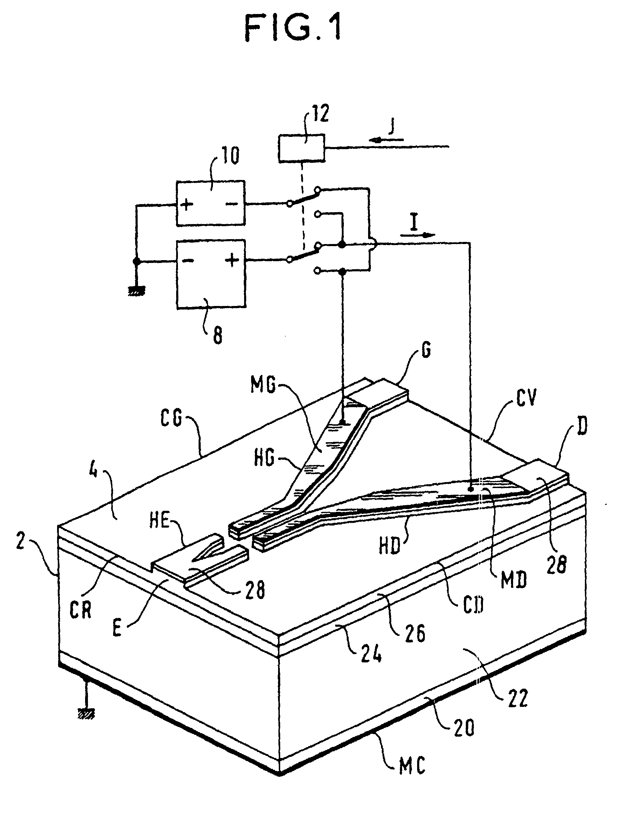

La figure 1 montre une vue en perpective d'un commutateur DOS de l'art antérieur. Un premier élément de ce DOS antérieur est une plaquette 2 qui est constituée d'un matériau, par exemple monocristallin et semi-conducteur, transparent à une onde lumineuse à traiter, par exemple infrarouge. Un indice de réfraction d'au moins une couche de ce matériau est sensible à une action électrique, par exemple par variation de la densité de porteurs de charges injectés dans cette couche par un courant électrique ou extrait de celle-ci par une tension électrique. Cette plaquette s'étend de manière générale selon un plan de guidage 4 qui est par exemple horizontal. Elle comporte une succession verticale de couches horizontales qui sont les suivantes:
- Une couche de contact inférieure 20 à fort dopage d'un premier type de conductivité, par exemple du type n, au contact d'une électrode commune MC.
- Un substrat 22 par exemple de type n.
- Une couche guidante 24 présentant un indice de réfraction supérieur à celui de ce substrat.
- Une couche de confinement 26 présentant un indice de réfraction inférieur à celui de cette couche guidante. Cette couche de confinement présente une épaisseur complète dans l'étendue de trois guides de lumière constituant un guide d'entrée HE et deux guides de sortie HD et HG. En dehors de cette étendue cette couche a une épaisseur diminuée. Elle est surmontée par un milieu présentant un indice de réfraction inférieur à celui de cette couche et constitué typiquement par l'atmosphère de manière à assurer le guidage de ladite onde lumineuse par ces guides.
- Enfin une couche de contact supérieure 28 à fort dopage d'un deuxième type de conductivité opposé au premier, c'est-à-dire par exemple du type p. Cette couche de contact supérieure 28 est exclusivement présente là où la couche de confinement 26 a sa dite épaisseur complète. Des électrodes droite MD et gauche MG sont formées sur la couche de contact supérieure 28 dans l'étendue des guides de sortie HD et HG.

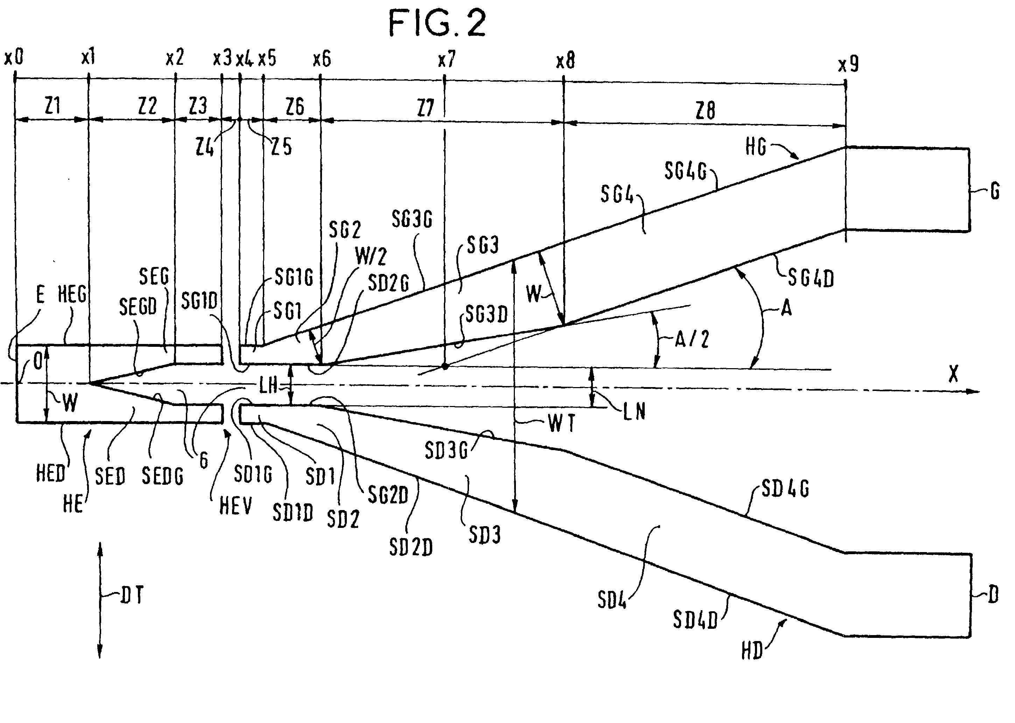

Dans le plan de guidage 4 la plaquette 2 présente:
- un côté arrière CR
- un côté avant CV,
- un axe OX (voir figure 2) portant des abscisses x1....x9 croissant de ce côté arrière à ce côté avant selon une direction longitudinale définie par cet axe ,
- un côté droit CD,
- un côté gauche CG, et
- une direction transversale DT joignant ce côté droit et ce côté gauche.

Des zones Z1...Z8 sont définies chacune par une dite abscisse ou entre deux dites abscisses.

Le commutateur comporte :
- une entrée E située dudit côté arrière pour recevoir ladite onde lumineuse,
- deux sorties D, G situées dudit côté avant pour restituer cette onde lumineuse, ces deux sorties constituant une sortie droite D située à droite dudit axe et une sortie gauche située G à gauche dudit axe,
- et un ensemble constitué par lesdits guides HE, HD, HG. Ces derniers sont formés dans le plan de guidage 4 pour guider cette onde de manière monomodale sur commande entre d'une part cette entrée et d'autre part l'une et/ou l'autre de ces deux sorties.

Chacun de ces guides s'étend linéairement en forme de ruban. Il a en chacun de ses points une largeur. Il a aussi deux bords, droit et gauche, dans ce plan de guidage. Sa largeur constitue une largeur normale W de ce guide lorsqu'elle est peu inférieure, par exemple comprise entre 50 % et 100 % d'une largeur de guidage multimodal au-dessus de laquelle ce guide pourrait guider ladite onde lumineuse de manière multimodale. Chaque tel bord présente dans chaque dite zone la forme générale d'un segment d'une droite associée à ce bord. Certains de ces bords sont parallèles à la direction longitudinale du commutateur. D'autres de ces bords présentent des inclinaisons par rapport à cette direction.

Cet ensemble de guides inclut :
- un guide d'entrée HE s'étendant selon l'axe OX avec une largeur normale de ce guide, entre une extrémité arrière constituant ladite entrée E et une extrémité avant HEV de ce guide, cette extrémité avant ayant une abscisse x3, ce guide d'entrée ayant des bords droit HED et gauche HEG,
- et deux guides de sortie, l'un droit HD et l'autre gauche HG, s'étendant en continuité optique avec le guide d'entrée à droite et à gauche de l'axe OX, à partir d'une abscisse de début de guides de sortie x4 au moins égale à l'abscisse x3 de l'extrémité avant du guide d'entrée, jusqu'aux deux sorties droites D et gauche G, respectivement.

Chacun de ces guides de sortie droit (ou gauche) comporte des segments se succèdant d'arrière en avant :
- Un segment récepteur droit SD1 (ou gauche SG1) correspondant à ce guide de sortie et s'étendant selon ladite direction longitudinale. Chacun de ces segments récepteurs occupe une zone de réception commandée Z5 s'étendant de ladite abscisse de début de guides de sortie x4 à une abscisse de divergence x5. Il a une largeur égale à une fraction inférieure à 50 % de ladite largeur de guide normale W. Il a aussi un bord externe droit SD1D (ou gauche SG1G) associé à la même droite que le bord droit HED (ou gauche HEG) du guide d'entrée HE. Il a enfin un bord interne gauche SD1G (ou droit SG1D) en regard du bord interne du segment récepteur de l'autre guide de sortie gauche (ou droit, respectivement). Un intervalle 6 est laissé entre les deux bords internes de ces deux segments récepteurs. Cet intervalle présente une largeur constante constituant une largeur de lacune normale LN.
- Enfin des segments divergents droits SD2...SD4 ou gauches SG2..SG4 correspondent auxdits guide de sortie et segment récepteur droit ou gauche. Ils s'étendent et se succédent à la fois vers l'avant et vers le côté droit (ou gauche, respectivement) à partir de ladite abscisse de divergence. Chaque segment divergent droit (ou gauche SG4) possède un bord externe droit (ou gauche SG4G) et un bord interne gauche (ou droit SG4D) respectivement. Les segments divergents successifs de chaque guide sortie droit (ou gauche) constituent un segment de sortie droit SD4 (ou gauche SG4), respectivement, dans une zone de sortie Z8 située à des abscisses x8, x9 substantiellement supérieures à l'abscisse de divergence x5. Les droites associées aux bords externe et interne SD4D, SD4G, SG4D, SG4G de chaque segment de sortie présentent une même inclinaison constituant une inclinaison normale A de ce segment de sortie. Elles rencontrent les droites associées aux bords externe et interne du segment récepteur correspondant à des abscisses de rencontre externe x5 et interne x7 respectivement. Dans l'exemple donné cette abscisse de rencontre externe est constituée par l'abscisse de divergence x5. La largeur de ces segments de sortie est une dite largeur normale W.

Pour l'onde lumineuse à traiter l'ensemble des guides d'entrée et de sortie constitue une structure guidante s'étendant du côté arrière CR au côté CV et présentant une largeur totale WT selon la direction transversale DT. Cette largeur totale constitue d'abord une dite largeur de guide normale W dans les zones Z1...Z5 occupées par le guide d'entrée HE et lesdits segments récepteurs SD1 et SG1 des guides de sortie. Puis elle croit progressivement vers l'avant à partir de l'abscisse de divergence x5.

Cette structure guidante présente pour le guidage de ladite onde lumineuse une lacune de guidage 6 s'étendant sur l'axe OX et ayant une largeur selon la direction transversale DT. Cette lacune de guidage 6 est présente aux abscisses x2....x9 qui sont supérieures à une abscisse de début de lacune x2 non supérieure à ladite abscisse de début de guides de sortie x4. Cette lacune est par contre absente aux abscisses xo inférieures à cette abscisse de début de lacune. Une largeur de lacune LH est définie à chaque abscisse. Elle est égale à largeur de la lacune de guidage ou elle est nulle selon que cette lacune de guidage est présente ou absente à cette abscisse. Cette largeur de lacune est donc nulle dans une zone d'entrée Z1 occupée par le guide d'entrée HE en-deçà de l'abscisse de début de lacune x2. Puis elle est égale à la largeur de lacune normale LN dans la zone de réception commandée Z5. Elle croit enfin dans la zone de sortie Z8 pour assurer un découplage progressif de deux modes de ladite onde lumineuse susceptibles d'être guidés respectivement par les deux dits guides de sortie, de sorte qu'au-delà d'une extrémité avant de cette zone de sortie ces deux guides de sortie cessent de coopérer pour constituer une structure guidante.

Un taux d'élargissement de lacune peut être défini pour chaque abscisse comme étant un taux de croissance de la largeur de lacune en fonction de l'abscisse. Ce taux est donc nul lorsque cette largeur de lacune reste nulle ou reste égale à la largeur de lacune normale. Dans la zone de sortie Z8 ce taux est défini par les inclinaisons normales et il constitue alors un taux normal d'élargissement de lacune. Plus particulièrement les inclinaisons des deux guides de sortie sont les mêmes, ces deux guides de sortie étant symétriques par rapport à l'axe OX et faisant un même angle A avec cet axe. Le taux normal d'élargissement de lacune vaut alors tg2A.

Les dispositions précédemment décrites font apparaître deux zones de transition, l'une d'entrée, l'autre de sortie, dans lesquelles le taux d'élargissement de lacune ainsi défini présente des variations:

La zone de transition d'entrée Z2, Z3, Z4 comporte les abscisses de début de lacune x2 et de début de guides de sortie x4. Dans cette zone des variations du taux d'élargissement de lacune en croissance et en décroissance font passer la largeur de lacune d'une valeur restant d'abord nulle dans la zone d'entrée Z1 à une valeur restant ensuite égale à la largeur de lacune normale LN dans la zone de réception commandée Z5.

La zone de transition de sortie Z7 inclue l'abscisse de rencontre interne x7. Elle fait passer le taux d'élargissement de lacune d'une valeur d'abord nulle au voisinage la zone de réception commandée Z5 à une valeur finale égale au taux normal d'élargissement de lacune dans la zone de sortie Z8.

L'électrode droite MD et l'électrode gauche MG sont formées respectivement sur les guides de sortie droit HD et gauche HG à partir de leurs segments récepteurs SD1 et SG1. Elles se continuent au moins jusqu'à une extrémité arrière de la zone de sortie Z8 et de préférence comme représenté jusqu'à une extrémité avant x9 de ces zones. Elles permettent d'exercer sélectivement dans ces guides les actions électriques qui sont nécessaires pour provoquer les modifications locales souhaitées des indices de réfraction de ces guides.

Le commutateur comporte enfin une source électrique 8, 10, 12 recevant un signal de commande J et fournissant en réponse aux électrodes un signal électrique I pour que lesdites modifications locales d'indices de réfraction couplent optiquement le guide d'entrée HE audit guide de sortie droit HD et/ou au guide de sortie gauche HG selon la valeur de ce signal de commande.

Plus particulièrement, dans l'exemple donné, le signal de commande J commande un commutateur électrique 12. Ce dernier active l'une des deux électrodes droite et gauche. Il la connecte pour cela à une source 8 fournissant potentiel positif par rapport à la masse constituée par l'électrode commune MC. Un courant passe alors à travers la plaquette 2 à partir de cette électrode activée et injecte des porteurs de charges dans la couche guidante 24.

L'électrode non activée est connectée à une source à potentiel négatif 10 pour réaliser une déplétion de porteurs sous cette électrode. L'indice de réfraction est ainsi rendu plus petit. sous l'électrode activée et l'onde lumineuse à traiter reçue dans le guide HE passe dans celui des guides de sortie dont l'indice est le plus grand.

La largeur de séparation normale LN précédemment mentionnée a été choisie pour assurer l'isolation électrique mutuelle des deux électrodes droite MD et gauche MG dans la zone de réception commandée Z5.

Dans le cas du commutateur connu, l'une au moins des deux dites zones de transition est l'objet d'un aménagement qui modifie localement la largeur de la lacune de guidage, par rapport à ce qui été précédemment décrit, pour limiter la valeur maximale présentée par le taux d'élargissement de lacune dans cette zone. De tels aménagements peuvent avantageusement prendre l'une ou l'autre et de préférence l'ensemble de deux formes.

Le commutateur connu montré sur les figures 1 et 2 présente une longueur hors tout de l'ordre de 3mm, jugée excessive pour des systèmes de routage photonique par matrices de commutateurs. La longueur de ce DOS connu pourrait être réduit par une augmentation de l'angle entre les deux branches typiquement inférieur à 1° dans l'exemple décrit. Mais l'augmentation de l'angle entre les deux branches a pour résultat une augmentation des pertes d'insertion qui ne peut être tolérée dans un système de routage par matrices de commutation, où les DOS sont raccordés en cascade en nombre plus ou moins grand.

En revanche, le taux d'extinction dans la branche non sélectionnée de ce DOS connu est important, >30dB.

Autrement dit, le taux de diaphonie est faible et ce, grâce à la forme des guides HG et HD dans la région de transition Z7 qui cherche à augmenter rapidement la distance latérale entre les deux guides (HD, HG) dès la sortie de la région de commutation (à partir de X6 au lieu de X7), sans augmenter pour autant l'angle entre les guides de sortie et, en conséquence, les pertes d'insertion.

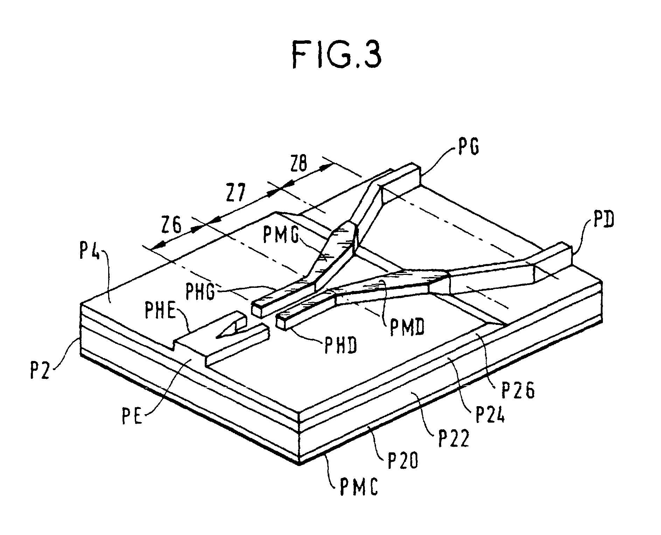

Sur la figure 3, l'on voit une vue en perpective d'un exemple d'une réalisation d'un commutateur DOS selon l'invention.

Ce commutateur selon l'invention comporte plusieurs éléments qui assurent les mêmes fonctions que les éléments correspondants des commutateurs connus, tels que montrés sur les figures 1 et 2 par exemple, ces éléments étant dits ci-après "éléments communs".

Lorsqu'un élément commun du commutateur connu est représenté sur la figure 3, il est désigné par la lettre P suivie par les signes de référence qui désignent l'élément commun correspondant du commutateur connu tel que décrit ci-dessus et sa description comme élément de la figure 3 sera abrégée.

Tout comme le DOS de l'art connu présenté sur les figures 1 et 2, le commutateur DOS de l'invention comprend une plaquette 2 monocristalline et semi-conductrice, par exemple de l'InP ou des composés ternaires et quaternaires comprennent ces éléments. La plaquette 2 s'étend selon un plan de guidage 4 qui est disposé horizontalement dans la figure pour faciliter la description qui suit.

Bien entendu, cette disposition horizontale est arbitraire et adoptée uniquement aux fins de la description ; le commutateur DOS fonctionne de la même manière indépendamment de son orientation dans l'espace. Etant donné la disposition horizontale du DOS dans cette figure, ce DOS comporte une succession verticale de couches horizontales comprenant :
- une couche de contact inférieure P20 au contact d'une électrode commune PMC ;
- un substrat P22 ;
- une couche guidante P24 ;
- une couche de confinement P26 ;
- une couche de contact supérieure P28.

Dans l'exemple de réalisation de la figure 3, les différents éléments communs énumérés ci-dessus ont les mêmes fonctions que dans le DOS de l'art connu montré sur les figures 1 et 2. Aussi, leurs principales caractéristiques sont similaires sinon identiques ; notamment leur réalisation, leur composition, leur dopage, leurs indices de réfraction relatifs. Les paramètres géométriques sont le mêmes et ne sont pas portés sur la figure 3 ; cependant les valeurs de ces paramètres ne sont pas forcément les mêmes.

En ce qui concerne les caractéristiques de l'invention qui ne sont pas connues de l'art antérieur, telles que mentionnées ci-dessus, lesdits premier et deuxième guides optiques de sortie (PHG, PHD) comprennent chacun respectivement au moins une première partie (en zone Z6) et une deuxième partie (en zone Z8), ces première et deuxième parties étant couplées par une transition (en zone Z7), caractérisées en ce que au moins un desdits guides de sortie (PHG, PHD) présente, dans le plan de guidage 4, une largeur de mode de propagation guidée qui est plus faible dans ladite deuxième partie (zone Z8) que dans ladite première partie (zone Z6) du guide respectif de sortie (PHG, PHD).

Autrement dit, le mode est plus fortement confiné dans les guides de ladite deuxième partie (zone 8) que dans les guides de ladite première partie (zone 6) des guides de sortie (PHG, PHD).

Ceci peut être réalisé de plusieurs façons différentes, dont l'une qui est montrée en exemple sur la figure 3 où l'on voit qu'un saut d'indice de réfraction plus important dans ladite deuxième partie (zone 8) est obtenu par une gravure plus profonde du ruban gravé dans cette deuxième partie. La largeur du ruban est reduite en cette deuxième partie afin de conserver une propagation monomode dans la structure guidante.

La région de transition (zone Z7) est avantageusement réalisée de manière à conférer à cette dernière une variation adiabatique du confinement entre ladite première partie ayant un faible confinement et ladite deuxième partie ayant un fort confinement. Dans l'exemple de la figure 3, cette transition adiabatique est réalisée dans la zone de transition (Z7) par une variation adiabatique de la profondeur de la gravure du ruban gravé.

L'utilisation d'une transition adiabatique dans la région de transition (zone Z7) est avantageuse parce que les pertes d'insertion du commutateur DOS ainsi réalisées doivent être inférieures aux pertes dues à une transition non adiabatique (non montrée). Une variante de l'invention comprend une telle transition non adiabatique, selon laquelle ladite première partie du guide de sortie possède un indice de réfraction n₁, et ladite deuxième partie du guide de sortie possède un indice de réfraction n₂>n1, ce qui rend le confinement plus fort dans cette deuxième partie, et lesdites première et deuxième parties sont juxtaposées bout à bout ("butt joint" en anglais) donnant un saut d'indice brutal dans la région de transition.

Le saut d'indice de réfraction, ou la transition entre ladite première partie à faible confinement et ladite deuxième partie à fort confinement peut donc être adiabatique ou non et sur une longueur plus ou moins importante dans le sens de propagation de la lumière.

Une telle transition peut être réalisée par toute technique connue de l'homme de l'art, dont quelques exemples seulement seront mentionnés pour illustrer quelques variantes de l'invention.

Le saut d'indice mentionné ci-dessus peut être obtenu par exemple par l'utilisation des matériaux différents dans les deux parties du guide de sortie, ou des dopants différents, ou des concentrations différentes de dopants ou de défauts de structure cristalline ou amorphe des guides, éventuellement induits par bombardement ionique ou rayonnement ultraviolet ou autres. Toutes ces techniques sont à la portée de l'homme de l'art, et permettront de faire des transitions adiabatiques ou non selon la conception du constructeur.

La figure 3 montre une région de transition (Z7) entre deux guides optiques formant respectivement ladite première et ladite deuxième parties des guides de sortie, tous ces guides étant réalisés par la technique de ruban gravé. De la même manière, il est envisageable de réaliser une transition semblable entre guides réalisés par la technique de ruban enterré dans une autre variante de l'invention (non montrée).

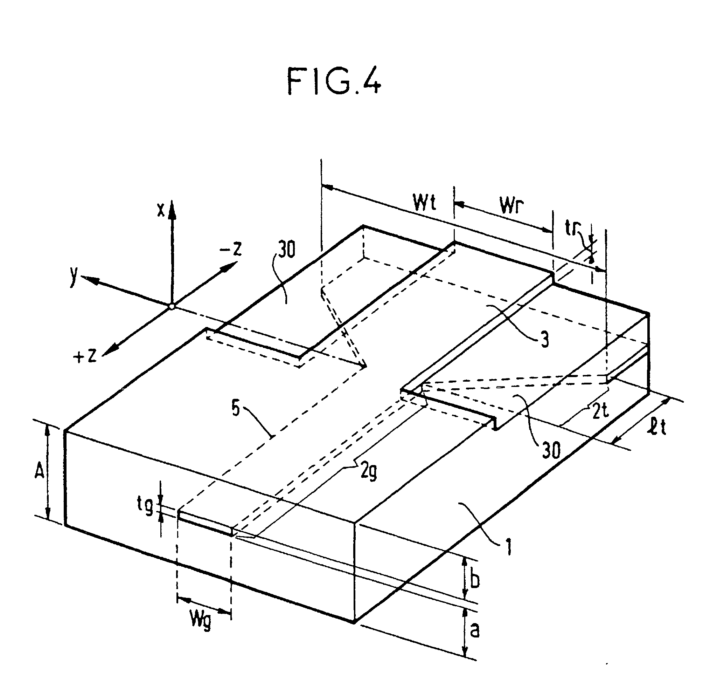

Dans un autre exemple d'une variante de l'invention, il est envisagé de réaliser une transition adiabatique entre un guide optique en ruban gravé et un guide optique en ruban enterré qui représentent respectivement lesdites première et deuxième parties desdits guides de sortie du commutateur DOS de l'invention. Une telle transition est montrée sur la figure 4, et sa réalisation est décrite plus en détail dans la demande de brevet français FR-94 00886 du 27 janvier 1994 au nom de la Demanderesse.

Sur la figure 4, donc, on voit schématiquement et en transparence partielle un exemple d'une transition adiabatique entre une structure guidante réalisée en ruban gravé et une autre en ruban enterré.

Sur un substrat 1 d'épaisseur **a**, une couche guidante 5 a été déposée par les techniques classiques d'épitaxie de couches fines, telles que habituellement appliquées à l'élaboration de composants électroniques ou optoélectroniques. Le substrat 1 sera un substrat semi-conducteur présentant les qualités requises pour l'élaboration du circuit optoélectronique envisagé. A l'état actuel de la technique, et tel que décrit dans le document : "L'optique intégrée dans les matériaux semiconducteurs III-V", par A. Carenco et al., L'Echo des Recherches, n°137, 1989, le substrat sera par exemple un composé III-V, tel l'AlₓGa₁₋ₓAs sur GaAs (avec x<1) ou tel que l'InP ; des travaux actuels portent également sur l'utilisation de Si comme substrat pour de tels circuits. La couche guidante 5 sera respectivement par exemple GaAs (sur substrat AlGaAs) ou In₁₋ₓGaₓAs_{y}P_{1-y} ou encore In_{1-x-y}GaₓAl_{y}As sur substrat InP (x<1, y<1). Les composés III-V sont considérés comme étant prometteurs pour de tels circuits optoélectroniques intègres parce que leur bande interdite correspond aux longueurs d'onde couramment utilisées dans des composants optoélectroniques actifs (lasers, diodes lumineuses, et cetera) et passifs (guides optiques, fibres optiques, et cetera), et parce que des composants purement électroniques peuvent aussi être élabores de tels composés sur le même substrat.

La figure ne montre que la partie du substrat qui porte la transition, mais ce substrat s'étend sur une surface bien plus grande dans le plan y-z, et peut comporter de nombreux composants optiques, électroniques, et électro-optique. Ladite couche guidante a une épaisseur t_{g} . Les techniques classiques de gravure sont ensuite appliquées pour effectuer l'ablation des aires de chaque coté pour définir une structure guidante 5 ayant une largeur w_{g} dans une zone 2_{g} de propagation guidée (qui formera ensuite un guide ruban enterre), et une largeur variable dans une zone de transition 2ₜ qui aura une longueur lₜ selon la direction de propagation z. Selon cette construction, la largeur de la structure guidante varie dans la zone de transition 2ₜ entre la largeur du guide ruban enterré w_{g} et la largeur finale de la transition wₜ . Selon une caractéristique avantageuse, cette variation de largeur est adiabatique.

La figure nous montre qu'une ou plusieurs couches épitaxiales, ayant une épaisseur totale **b**, ont été déposées sur la structure guidante de la figure la selon les techniques classiques connues de l'homme de l'art. L'épaisseur totale A du dispositif peut donc être décomposée en épaisseur **a** du substrat 1, épaisseur t_{g} du guide ruban enterré et épaisseur **b** de(s) couche(s) supérieure(s).

Encore, par des techniques classiques bien connues de l'homme de l'art, une gravure est ensuite effectuée à une profondeur de tᵣ sur la couche supérieure pour réaliser un guide optique 3 dit en ruban gravé par ablation des aires 30 de part et d'autre dudit guide ruban gravé 3. Le début du guide ruban gravé 3 est ainsi superposé sur la zone de transition 2ₜ présentant une largeur variable de la structure guidante enterrée.

Cette vue de la figure 4 est instructive, dans la mesure ou elle nous montre la relation spatiale entre les structures de confinement latéral (+/-y) de l'onde guidée selon une direction préférentielle de propagation (+/- z). En effet, le "coeur" ou la couche guidante reste la même avant, pendant, et après la transition de guides de l'invention. Seule la structure de confinement latéral change lors de la transition de modes de propagation. Dans la région +z, le confinement latéral est assuré par la largeur w_{g} de la couche guidante. Dans la région -z, le confinement latéral est assuré par la largeur wᵣ du guide optique formé par le ruban gravé 3 et la couche guidante, qui s'élargit selon la direction -z dans la zone de transition de longueur lₜ.

On peut donner un exemple non-limitatif d'un mode de réalisation du dispositif de la figure 4, en apportant des précisions sur les dimensions des couches et des structures guidantes, ainsi que des matériaux employés. Par exemple, pour une transition de guides optiques qui doit fonctionner à une longueur d'onde λ de 1,55 microns (µm), le dispositif de la figure 4 peut être réalisé sur un substrat InP, avec la couche guidante et le ruban enterré 5 réalisés d'un composé quaternaire In₁₋ₓGaₓAs_{y}P_{1-y} .

Le paramètre y, qui détermine la bande interdite du matériau quaternaire, sera choisi en fonction de la longueur d'onde λ de la lumière à véhiculer dans le guide. En effet, le paramètre y détermine la fréquence de coupure du guide, donc la longueur minimale λ_{g} de l'onde qui pourra se propager dans le guide. Pour λ < λ_{g}, la lumière est absorbée, tandis que pour λ > λ_{g}, le matériau est transparent. Dans l'exemple choisi, pour travailler à λ = 1,55 µm, on peut choisir λ_{g} = 1,3 µm, qui sera réalisé avec y = 0,62 environ ; ou bien pour obtenir λ_{g} = 1,5 µm, il faut utiliser y = 0.89 environ. Ensuite, le paramètre x est choisi pour assurer l'accord de maille avec le substrat, selon les règles connues de l'homme de l'art. La règle empirique est que x = y/2,197.

Si, dans la figure 4, on choisi une réalisation avec λ_{g} = 1,55 µm, l'indice de réfraction du guide enterré sera de l'ordre de n=3,57. Dans ces conditions, le confinement latéral peut être assuré par un guide ayant une largeur w_{g} = 2 µm, avec un épaisseur de la couche guidante en In₁₋ₓGaₓAs_{y}P_{1-y} de 0,1 µm environ. Ensuite, une couche de InP est déposée sur le ruban enterré, et le confinement latéral est assuré par le saut d'indice optique entre le In₁₋ₓGaₓAs_{y}P_{1-y} et le InP qui l'entoure.

Quelques microns au dessus de la couche guidante, dans la zone de transition, le ruban gravé est réalisé dans une couche épitaxiale supérieure de InP. Cette structure assurera le confinement latéral de l'onde guidée, pendant et après l'élargissement de la couche guidante dans la zone de transition. Pour réaliser cette structure, une gravure est effectuée pour enlever une profondeur tᵣ de 1,5 µm, de chaque coté de la structure 3 de ruban gravé, qui aura une largeur de 4 µm environ par exemple.

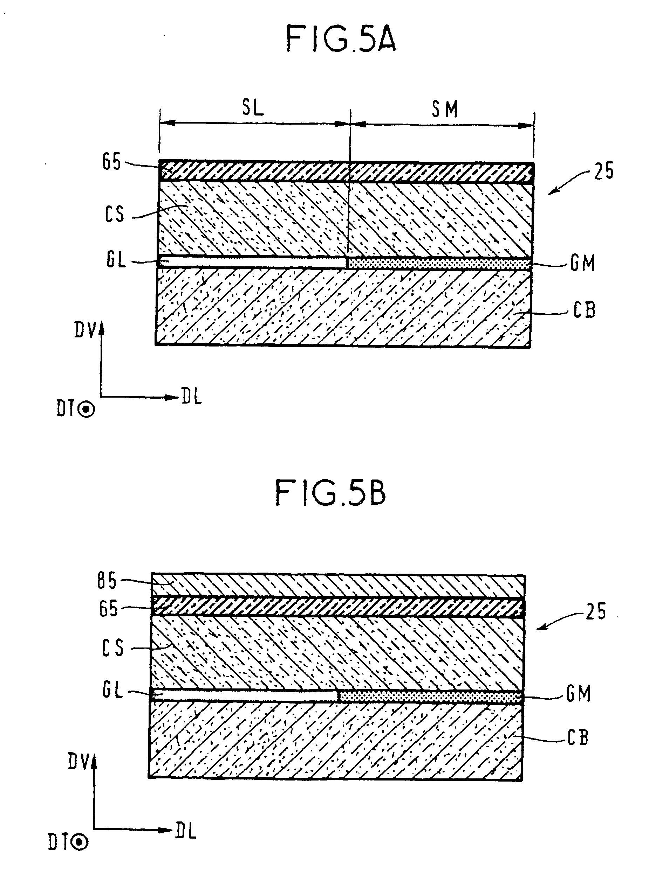

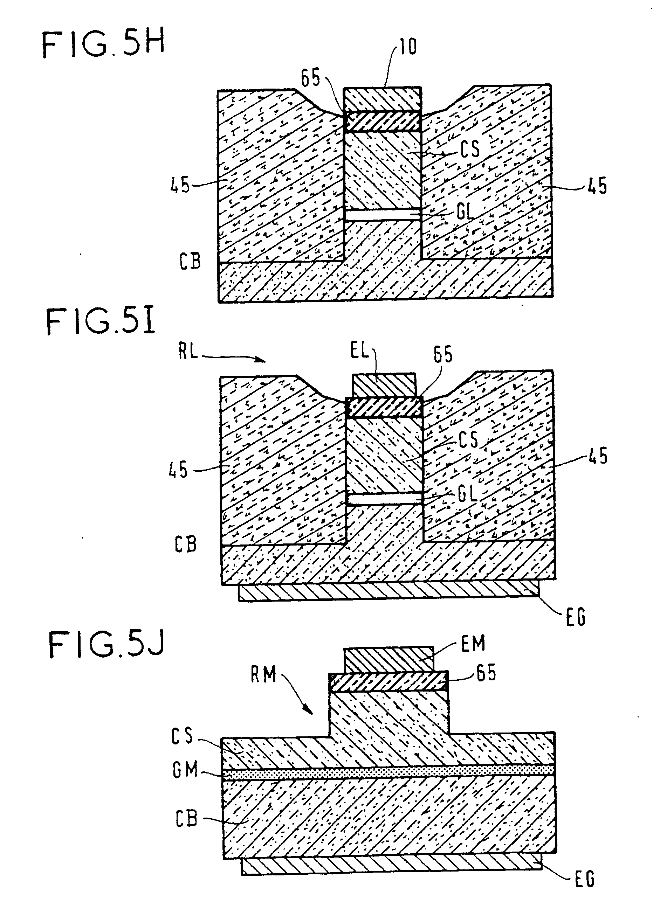

Sur les figures 5a à 5j nous montrons quelques étapes d'un procédé de réalisation d'une transition entre un guide de type ruban enterré et un guide de type ruban gravé, tel que décrit dans la demande de brevet FR-94 10502 du 31 aout 1994 au nom de la Demanderesse, et pouvant servir à réaliser une transition pour la réalisation d'un commutateur selon l'invention. Ce procédé est un procédé dit d'autoalignement, c'est à dire que les positions et les orientations des deux rubans sont obtenus à partir d'un même masque au cours de l'étape de gravure qui forme la bande de délimitation.

La figure 5a représente une vue en coupe longitudinale d'une plaquette semiconductrice dans laquelle un ruban enterré et un ruban externe doivent être formés.

La figure 5b représente une vue de cette plaquette en coupe longitudinale après dépôt d'une couche de délimitation.

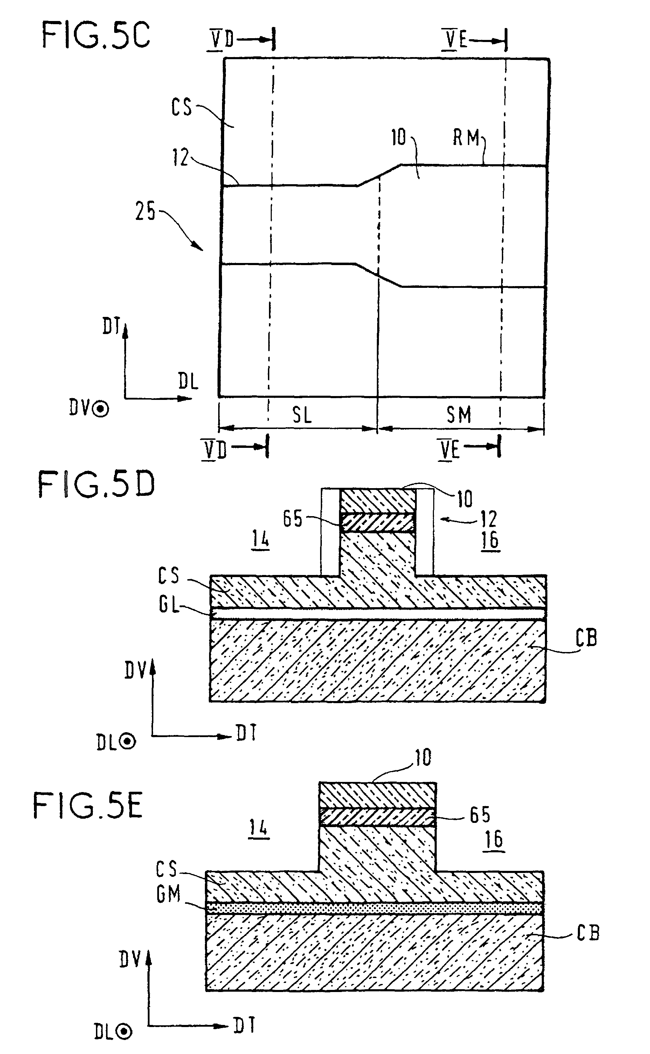

La figure 5c représente une vue de dessus de cette plaquette après gravure de la couche de délimitation et une première attaque de la plaquette.

Les figures 5d et 5e représentent deux vues de cette plaquette en coupe selon deux plans transversaux IV-IV et V-V de la figure 5c après cette première attaque.

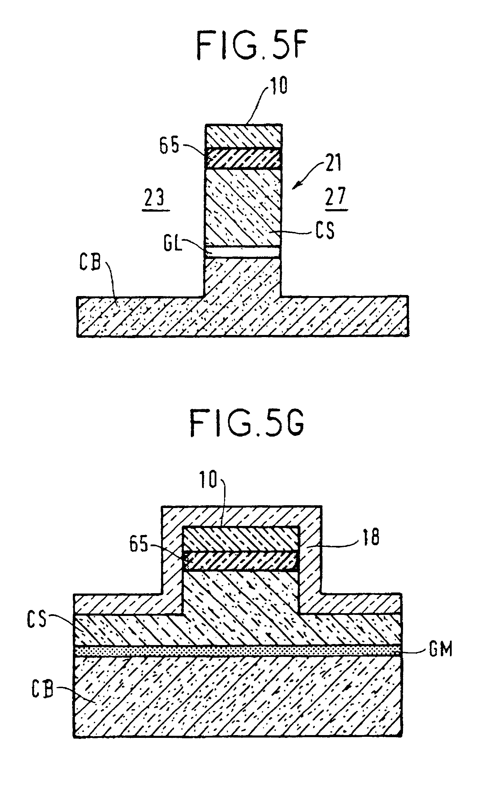

Les figures 5f et 5g représentent deux vues de cette plaquette en coupe selon les deux mêmes plans transversaux après une deuxième attaque.

La figure 5h représente une vue de cette plaquette en coupe par le plan transversal IV-IV après remplissage d'évidements latéraux.

Les figures 5i et 5j représentent deux vues de cette plaquette en coupe par les deux mêmes plans transversaux après la formation d'électrodes.

Conformément à ces figures, un composant à fabriquer comporte une plaquette semiconductrice 25 formée de couches s'étendant selon une direction longitudinale DL et une direction transversale DT et superposées selon une direction verticale DV. Ces directions sont définies par rapport à cette plaquette. Cette plaquette comporte un segment à ruban enterré SL et un segment à ruban externe SM s'étendant et se succédant selon la direction longitudinale et comportant respectivement un ruban enterré RL et un ruban externe RM. Ces rubans sont représentés aux figures 5i et 5j. Ils sont mutuellement alignés selon la direction DL.

Chacun d'eux comporte une couche à indice accru GL ou GM située entre deux couches de confinement l'une inférieure CB et l'autre supérieure CH. L'indice accru considéré ici est un indice de réfraction et il est accru par rapport à celui des couches de confinement de manière à limiter l'extension verticale d'un mode guidé selon lequel une onde optique doit se propager longitudinalement dans ce ruban.

La couche à indice accru GL et la couche de confinement supérieure CH du ruban enterré RL sont limitées transversalement entre deux blocs de confinement latéral 45 faisant parties de la plaquette 25 . Ces blocs ont un indice de réfraction inférieur audit indice accru de manière que cette limitation transversale de la couche à indice accru limite l'extension transversale du mode guidé par ce ruban. Ils sont par ailleurs réalisés de manière à confiner dans le ruban enterré un courant d'alimentation circulant verticalement dans la plaquette. Ceci peut être obtenu de manière connue par un accroissement de la résistivité électrique d'un matériau constitutif de ces blocs, et/ou par la formation d'une jonction semiconductrice bloquante dans ces blocs.

La couche de confinement supérieure CH du ruban externe RM à un indice de réfraction supérieur à celui d'un espace, par exemple gazeux, extérieur à la plaquette. Elle est limitée transversalement entre deux évidements 14 et 16 de la plaquette appartenant à cet espace extérieur et laissant subsister la couche à indice accru GM et la couche de confinement inférieure CB. Cette limitation transversale de la couche de confinement supérieure limite l'extension transversale du mode guidé par ce ruban.

Toutes ces couches ont été formées par des dépôts épitaxiaux sur un substrat non représenté. Ce substrat et la couche de confinement inférieure sont par exemple du type n. La couche de confinement supérieure CH est par exemple du type p de même qu'une couche de contact fortement dopée 65 qui a été déposée sur cette couche de confinement.

Le composant à fabriquer comporte aussi des électrodes EL, EM et EG formées au-dessus et au-dessous de la plaquette dans chacun des segments. Plus précisément les électrodes EL et EM sont respectivement formées sur le ruban enterré RL et sur le ruban externe RL et l'électrode inférieure EG est commune aux deux segments.

Le procédé de fabrication de ce composant comporte les opérations suivantes connues en elles-mêmes pour former le ruban externe RM :
- dépôt de la couche de confinement inférieure CB, de la couche à indice accru GL, GM, de la couche de confinement supérieure CH et d'une couche de délimitation 85 représentée à la figure 5b et surmontant la couche de confinement supérieure dans les deux segments,
- gravure de cette couche de délimitation pour former dans le segment à ruban externe SM une bande de délimitation 10 coïncidant transversalement avec le ruban externe RM à former,
- et attaque de la plaquette par un milieu d'attaque épargnant la bande de délimitation 10. Cette attaque est limitée en profondeur en déçà de la couche à indice accru GL, GM. Elle fait apparaître deux évidements latéraux initiaux 14 et 16 représentés à la figure 5e et situés de part et d'autre du ruban externe RM. Elle sera désignée ci-après comme étant une première attaque.

Le procédé comporte bien entendu aussi les opérations nécessaires à la formation du ruban enterré et des électrodes.

Dans le procédé connu de couplage bout à bout, on forme d'abord le ruban de l'un des segments, puis on attaque la plaquette dans l'autre segment jusqu'à la couche de confinement inférieure, puis on reforme une structure semiconductrice dans cet autre segment par des dépôts épitaxiaux sélectifs successifs, puis on forme le ruban de cet autre segment par une attaque convenable.

Conformément à la présente réalisation l'opération de gravure de la couche de délimitation est effectuée pour former aussi la bande de délimitation 10 dans le segment à ruban enterré SL en faisant coïncider transversalement cette bande avec le ruban enterré RL à former. Il en résulte que la première attaque dégage ensuite dans ce premier segment une amorce de ruban enterré 12. Cette amorce est représentés à la figure 5d. Elle fait saillie entre les deux évidements latéraux initiaux 14 et 16 qui sont limités en profondeur en deçà de la couche à indice accru GL.

Le procédé selon cet exemple comporte ensuite les opérations suivantes pour former le ruban enterré :
- Dépôt d'une couche de protection 18 dans les deux segments SL et SM.
- Gravure de cette couche de protection 18 pour ne la laisser subsister que dans le segment à ruban externe SM.
- Attaque de la plaquette par un milieu d'attaque épargnant la couche de protection. Cette deuxième attaque est poursuivie en profondeur au-delà de la couche à indice accru GL de manière à dégager dans le segment à ruban enterré SL un corps de ruban enterré 21. Ce corps est représenté à la figure 5f. Il fait saillie entre deux évidements latéraux approfondis 23 et 27.
- Enfin dépôt sélectif d'au moins un matériau 45 par une méthode de dépôt sélective qui est inefficace sur les parties subsistantes des couches de délimitation 10 et de protection 18. Ce dépôt constitue les blocs de confinement latéral 45 en remplissant lesdits évidements latéraux approfondis.

Les couches de délimitation 10 et de protection 18 sont typiquement constituées de matériaux diélectriques. Le procédé comporte alors en outre une opération d'élimination au moins partielle des parties subsistantes des couches de délimitation et de protection après le dépôt du matériau de confinement latéral 45 et avant la formation des électrodes supérieures EL et EM.

Les couches de confinement CB et CS sont par exemple constituées de phosphure d'indium Inp, la couche à indice accru GL, GM d'alliages ternaires ou quaternaires tels que Ga In AS, Ga In As P, la couche de délimitation 10 de nitrure de silicium Si3N4 et la couche de protection 18 de silice SiO2, au moins un matériau de confinement latéral 45 étant constitué par exemple de phosphure d'indium semi-isolant.

Le procédé montré sur les figures 5a à 5j peut se resumer comme suit : on forme d'abord par gravure une bande de délimitation délimitant en alignement le ruban enterré et le ruban externe et apte à résister à des attaques, puis une première attaque dégage le ruban externe et une amorce de ruban enterré, puis une deuxième attaque dégage le corps du ruban enterré après protection du ruban externe, enfin un dépôt sélectif réalise le confinement latéral du ruban enterré.

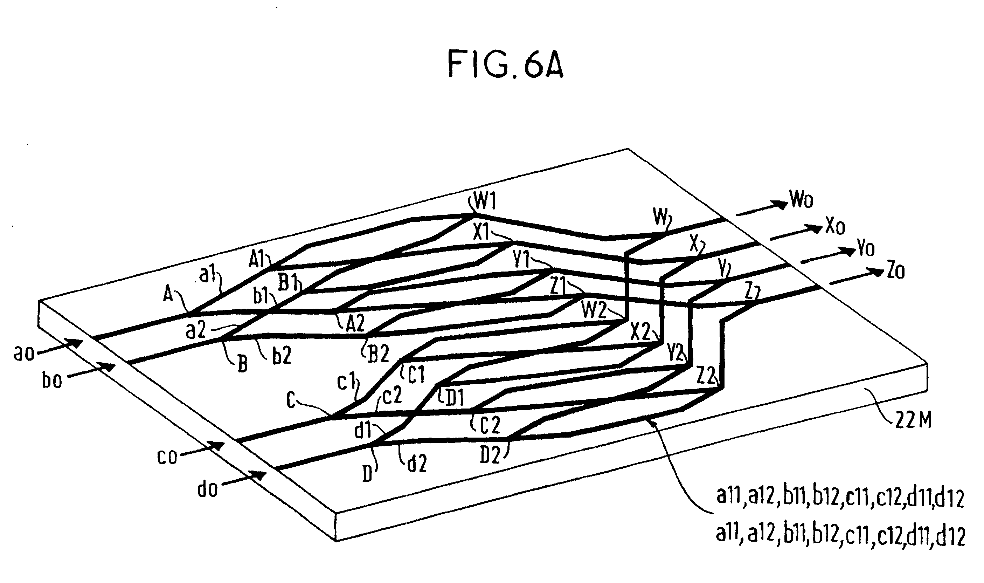

La figure 6a montre un exemple d'une matrice de commutation 4X4 constituée par une pluralité de commutateurs DOS selon l'invention. De la même manière, il est envisageable de réaliser *des* matrices de commutation 1 X N, N X 1, N X N, et/ou N X M.

Grâce à l'architecture de telles matrices en arborescence telle que montrée sur la figure 6a, différentes fonctionnalités de commutation peuvent être obtenues pour le routage photonique. Dans une connexion point à point, la matrice est non bloquante.

Dans des applications de cross-connexion, par ce que le DOS se comporte comme un coupleur 3dB en l'absence de polarisation, la matrice permet d'effectuer un routage point à multipoint ("broadcasting" en anglais). Dans l'autre sens de propagation, le DOS se comporte comme un combineur passif en l'absence de polarisation ce qui peut être très utile pour permettre la réalisation des applications à multiples longueurs d'ondes (WDM pour "Wavelength Division Multiplexing en anglais).

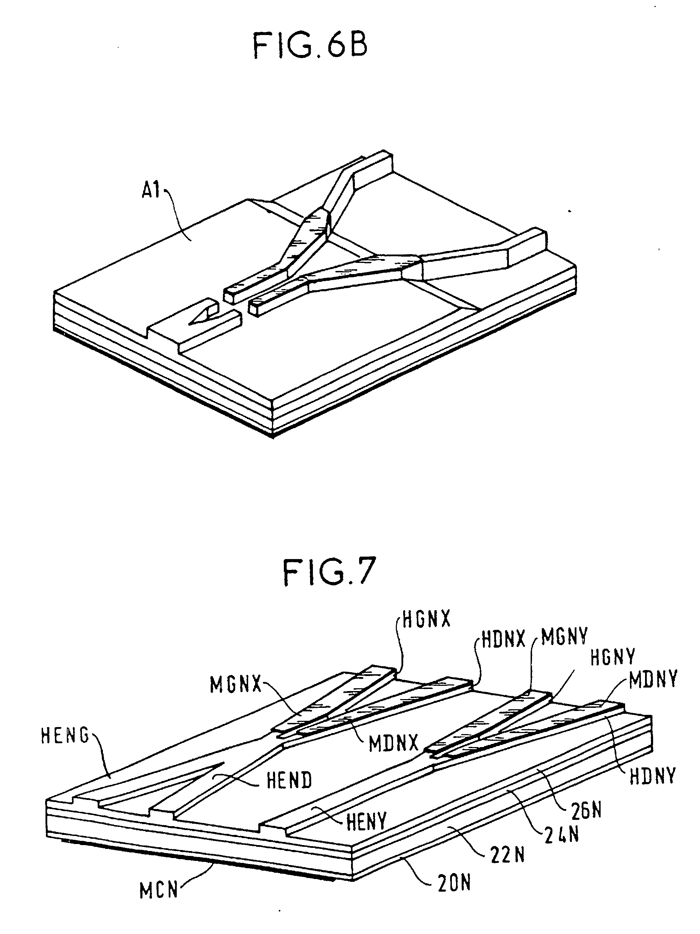

Sur la figure 6a, on voit quatre guides optiques d'entrée a0, b0, c0, d0 et quatre guides de sortie w0, x0, y0, z0 réalisés sur un substrat 22M par exemple en In P. Sur ces quatre guides d'entrée sont placés une première rangée de quatre commutateurs selon l'invention, A, B, C, D respectivement, dont un exemple est montré sur la figure 6b, chacun étant muni de ses deux sorties (a1, a2, b2, c1, c2, d1, d2 respectivement). Ces huit sorties sont raccordées respectivement aux entrées d'une deuxième rangée de commutateurs DOS selon l'invention (A1, A2, B1, B2, C1, C2, D1, D2). Les croisements de guides qui apparaissent sur la figure n'impliquent pas d'interaction entre les signaux lumineux qui se propageront sur les guides, car il n'y a pas de couplage entre les guides aux croisements.

Les troisième et quatrième rangés de DOS sont disposées avec deux entrées et une unique sortie. Le commutateur sélectionne ainsi l'entrée dont le signal sera acheminé vers l'unique sortie.

Les seize sorties (a11, a12, a21, a22, b11, b12, b21, b22, c11, c12, c21, c22, d11, d12, d21, d22) de cette deuxième rangée de commutateurs (A1, A2, B1, B2, C1, C2, D1, D2) sont donc raccordées après un croisement au seize entrées (w11, w12, w21, w22, x11, x12, x21, x22, y11, y12, y21, y22, z11, z12, z21, z22) de la trosième rangée de commutateurs (W1, W2, X1, X2, Y1, Y2, Z1, Z2), dont les huit sorties (w1, w2, x2, y1, y2, z1, z2) sont raccordées après croisement aux huit entrées de la quatrième rangée de commutateurs (W0, X0, Y0, Z0), qui fournit a son tour les quatre sorties de la matrice de commutation (w0, x0, y0, z0 respectivement).

Avec cette disposition, l'homme de l'art reconnaît qu'il est possible de raccorder n'importe quelle entrée à n'importe quelle sortie par l'application d'une jeu de commandes de routage sur un commutateur de chaque rangée de commutateurs. Une interconnexion à base de miroirs intégrés peut également être utilisée. (voir J.F. Vinchant et al. "New Compact Polarisation insensitive 4 X 4 switch matrix on InP with DOS and integrated Mirrors" ECOC'93, Montreux, Switz. Post deadline THC 12.4 9/14/93 - 9/16/93.

La figure 7 montre une variante d'un commutateur DOS ayant la forme de la lettre "X" au lieu de la lettre "Y", qui est également montré sur cette figure. On constate que les guides de sortie (HGNX, HDNX, HGNY, HDNY) et les électrodes de commande (MDNX, MGNX; MGNY, MDNY) sont identiques dans les deux cas, mais le DOS en "X" a deux entrées (HENG, HEND) au lieu d'une (HENY) dans le cas d'un DOS en "Y".

Pour la simplicité du dessin, la figure 7 montre des commutateurs DOS tels que connus de l'art antérieur, dépourvus des caractéristiques de la présente invention. Cependant, l'homme de l'art reconnaît qu'un commutateur DOS ayant la forme de la lettre "X" peut être réalisé selon les caractéristiques de l'invention de la même manière que décrite précédemment pour le DOS ayant la forme de la lettre "Y". Comme dans la description de la figure 3 ci-dessus, les éléments communs portent les memes repères que les figures 1 et 2, suivis de la lettre "N".

Aussi, étant donné la disposition horizontale du DOS dans cette figure, ce DOS comporte une succession verticale de couches horizontales comprenant :
- une couche de contact inférieure P20 au contact d'une électrode commune NMC ;
- un substrat 22N ;
- une couche guidante 24N ;
- une couche de confinement 26N ;

Dans l'exemple de réalisation de la figure 7, les différents éléments communs énumérés ci-dessus ont les mêmes fonctions que dans le DOS de l'art connu montré sur les figures 1 et 2. Aussi, leurs principales caractéristiques sont similaires sinon identiques ; notamment leur réalisation, leur composition, leur dopage, leurs indices de réfraction relatifs. Les paramètres géométriques sont le mêmes et ne sont pas portés sur la figure 7 ; cependant les valeurs de ces paramètres ne sont pas forcément les mêmes.

L'homme de l'art reconnaîtra également l'utilité de disposer des commutateurs DOS ayant les deux formes "X" et "Y" afin d'accorder une plus grande liberté dans la conception d'une matrice de commutateurs pour le routage photonique, et notamment des matrices N X N ayant N pair mais N non pas égal à une puissance de deux : N ≠ 2^{P}.

D'autre part, des performances intéressantes ont été reportées pour les DOS en "X" connus, à savoir un taux d'extinction amélioré par rapport à celui des DOS en "Y" (voir Nelson W.H. et al., Optical Fiber Conference OFC'94 Technical Digest, paper TuM2, p53 (1994), : "Large angle 1.3µm InP/In Ga As P digital optical switches with extinction ratios exceeding 20dB").

Dans la description détaillée donnée ci-dessus , quelques exemples non-limitatifs de réalisations selon l'invention et ses principales variantes ont été exposées afin d'en illustrer les principes, l'homme de l'art saura appliquer cet enseignement pour décliner l'invention dans un grand nombre d'autres réalisations non décrites ici, mais conformes aux principes de l'invention et comprises dans l'étendue des revendications qui suivent.

## Revendications

1. Commutateur binaire optique, comprenant un guide optique dit d'entrée (PHE), et un premier et un deuxième guides optiques dits de sortie (PHD, PHG), lesdits guides mutuellement disposés selon une bifurcation ayant la forme de la lettre "Y", lesdits premier et deuxième guides de sortie (PHD, PHG) chacun comprenant au moins une première partie (Z6, Z7) disposée à une extrémité dudit guide d'entrée (PHE), et une deuxième partie (Z8) disposée à une extrémité de ladite première partie (Z6, Z7); lesdites première et deuxième parties étant couplées par une transition (PMG, PMD) disposée dans une région de transition (Z7); et des moyens pour l'application d'un signal électrique de commande qui commande une différence d'indice de réfraction entre lesdites premières parties respectives desdits premier et deuxième guides de sortie ; **caractérisé en ce que** les paramètres optogéométriques d'au moins l'un desdits deux guides optiques de sortie sont sélectionnés de façon à ce que ledit guide présente, dans un plan contenant lesdits guides de sortie, une largeur de mode de propagation guidée qui est plus faible dans ladite deuxième partie que la largeur de mode dans ladite première partie du guide respectif de sortie.

2. Commutateur binaire optique, comprenant deux guides optiques dits d'entrée (HENG, HEND), et un premier et un deuxième guides optiques dits de sortie (MGNX, MDNX), lesdits guides mutuellement disposés selon un croisement ayant la forme de la lettre "X", lesdits premier et deuxième guides de sortie chacun comprenant au moins une première partie (Z6, Z7) disposée à une extrémité desdits guides d'entrée (HENG, HEND), et une deuxième partie (Z8) disposée à une extrémité de ladite première partie (Z6, Z7); lesdites première et deuxième parties étant couplées par une transition disposée dans une région de transition (Z7); et des moyens pour l'application d'un signal électrique de commande qui commande une différence d'indice de réfraction entre lesdites premières parties respectives desdits premier et deuxième guides de sortie ; **caractérisé en ce que** les paramétres optogéométriques d'au moins l'un desdits deux guides optiques de sortie sont sélectionnés de façon à ce que ledit guide présente, dans un plan contenant lesdits guides de sortie, une largeur de mode de propagation guidée qui est plus faible dans ladite deuxième partie que la largeur de mode dans ladite première partie du guide respectif de sortie.

3. Commutateur binaire optique selon l'une quelconque des revendications 1 à 2, **caractérisé en ce que** ladite transition est réalisée entre une première partie ayant un indice de réfraction n₁, et une deuxième partie ayant un indice de réfraction n₂ > n₁.

4. Commutateur binaire optique selon la revendication 3, **caractérisé en ce que** ladite transition entre lesdites première et deuxième parties d'indices n₁,n₂ est réalisée par juxtaposition bout à bout.

5. Commutateur binaire optique selon l'une quelconque des revendications 1 à 2, **caractérisé en ce que** ladite transition est une transition adiabatique.

6. Commutateur binaire optique selon la revendication 5, **caractérisé en ce que** ladite transition adiabatique est réalisée par une technique de gravure.

7. Commutateur binaire optique selon la revendication 6, **caractérisé en ce que** ladite technique de gravure consiste à graver à une profondeur plus importante dans la région de ladite deuxième partie que la profondeur de gravure dans la région de ladite première partie desdits guides de sortie.

8. Commutateur binaire optique selon l'une quelconque des revendications 1 à 2, **caractérisé en ce que** lesdites premières et deuxièmes parties ont respectivement des dimensions physiques transversales à la direction de propagation de lumière dans lesdits guides, dites hauteur et largeur, et **en ce que** ladite hauteur desdites premières parties est inférieure a ladite hauteur desdites deuxièmes parties.

9. Commutateur binaire optique selon la revendication 8, **caractérisé en ce que** ladite largeur des dites deuxièmes parties est inférieure à ladite largeur desdites premières parties.

10. Commutateur binaire optique selon la revendication 5, **caractérisé en ce que** ladite transition adiabatique est réalisée entre lesdites premières parties qui sont réalisées par une technique de ruban gravé et lesdites deuxièmes parties qui sont réalisées par une technique de ruban enterré.

11. Commutateur binaire optique selon la revendication 5, **caractérisé en ce que** ladite transition adiabatique est réalisée entre lesdites premières parties et lesdites deuxièmes parties, toutes deux réalisées par une technique de ruban enterré.

12. Commutateur binaire optique selon l'une quelconque des revendications précédentes, **caractérisé en ce qu'**au moins lesdites premières parties sont réalisées en multiples puits quantiques.

13. Pluralité de commutateurs binaires optiques selon au moins une des revendications précédentes, **caractérisée en ce que** ces commutateurs sont raccordés entre eux pour constituer une matrice de commutation.

## Patentansprüche

1. Binärer optischer Schalter, aufweisend einen sogenannten Eingangs-Lichtleiter (PHE) und einen sogenannten ersten und einen sogenannten zweiten Ausgangs-Lichtleiter (PHD, PHG), wobei die Lichtleiter wechselseitig entsprechend einer Gabelung angeordnet sind, die die Form des Buchstabens "Y" hat, wobei der erste Ausgangslichtleiter und der zweite Ausgangslichtleiter (PHD, PHG) jeweils mindestens einen ersten Abschnitt (Z6, Z7), der an einem Ende des Eingangs-Lichtleiters (PHE) angeordnet ist, und einen zweiten Abschnitt (Z8) aufweisen, der an einem Ende des ersten Abschnitts (Z6, Z7) angeordnet ist, wobei der erste Abschnitt und der zweite Abschnitt durch einen Übergang (PMG, PMD) gekoppelt sind, der in einer Übergangszone (Z7) angeordnet ist, und Mittel zum Anlegen eines elektrischen Steuersignals, das eine Brechzahl-Differenz zwischen den jeweiligen ersten Abschnitten des ersten Ausgangs-Lichtleiters und des zweiten Ausgangs-Lichtleiters steuert; **dadurch gekennzeichnet, dass** die optogeometrischen Parameter von mindestens einem der beiden Ausgangs-Lichtleiter derart ausgewählt sind, dass der Lichtleiter in einer Ebene, die die Ausgangs-Lichtleiter enthält, eine Breite eines Modus einer zwangsgeführten Fortpflanzung aufweist, die in dem zweiten Abschnitt geringer als die Modusbreite in dem ersten Abschnitt des jeweiligen Ausgangs-Lichtleiters ist.

2. Binärer optischer Schalter, aufweisend zwei sogenannte Eingangs-Lichtleiter (HENG, HEND) und einen sogenannten ersten Ausgangs-Lichtleiter und einen sogenannten zweiten Ausgangs-Lichtleiter (MGNX, MDNX), wobei die Lichtleiter wechselseitig entsprechend einer Kreuzung angeordnet sind, die die Form des Buchstabens "X" hat, wobei der erste Ausgangs-Lichtleiter und der zweite Ausgangs-Lichtleiter jeweils mindestens einen ersten Abschnitt (Z6, Z7), der an einem Ende der Eingangs-Lichtleiter (HENG, HEND) angeordnet ist, und einen zweiten Abschnitt (Z8) aufweisen, der an einem Ende des ersten Abschnitts (Z6, Z7) angeordnet ist, wobei der erste und der zweite Abschnitt durch einen Übergang gekoppelt sind, der in einer Übergangszone (Z7) angeordnet ist, und Mittel zum Anlegen eines elektrischen Steuersignals, das eine Brechzahl-Differenz zwischen den jeweiligen ersten Abschnitten des ersten Ausgangs-Lichtleiters und des zweiten Ausgangs-Lichtleiters steuert;
**dadurch gekennzeichnet, dass** die optogeometrischen Parameter mindestens von einem der beiden Ausgangs-Lichtleiter derart ausgewählt sind, dass der Lichtleiter in einer Ebene, die die Ausgangs-Lichtleiter enthält, eine Breite eines Modus einer zwangsgeführten Fortpflanzung aufweist, die in dem zweiten Abschnitt geringer als die Modusbreite in dem ersten Abschnitt des jeweiligen Ausgangs-Lichtleiters ist.

3. Binärer optischer Schalter nach Anspruch 1 oder 2,
**dadurch gekennzeichnet, dass** der Übergang zwischen einem ersten Abschnitt, der eine Brechungszahl n₁ hat, und einem zweiten Abschnitt ausgeführt ist, der eine Brechungszahl n₂ > n₁ hat.

4. Binärer optischer Schalter nach Anspruch 3,
**dadurch gekennzeichnet, dass** der Übergang zwischen dem ersten und zweiten Abschnitt der Brechungszahlen n₁, n₂ durch stumpf zusammengestoßene bzw. End-zu-End-Juxtaposition ausgeführt ist.

5. Binärer optischer Schalter nach Anspruch 1 oder 2,
**dadurch gekennzeichnet, dass** der Übergang ein adiabatischer Übergang ist.

6. Binärer optischer Schalter nach Anspruch 5,
**dadurch gekennzeichnet, dass** der adiabatische Übergang durch eine Ätz-Technik ausgeführt ist.

7. Binärer optischer Schalter nach Anspruch 6,
**dadurch gekennzeichnet, dass** die Ätz-Technik darin besteht, in einer größeren Tiefe in der Zone des zweiten Abschnitts als die Ätz-Tiefe in der Zone des ersten Abschnitts der Ausgangs-Lichtleiter zu ätzen.

8. Binärer optischer Schalter nach Anspruch 1 oder 2,
**dadurch gekennzeichnet, dass** der erste und der zweite Abschnitt jeweils physikalische Dimensionen haben, Höhe und Breite genannt, die transversal zur Fortpflanzungsrichtung des Lichts in den Lichtleitern sind, und dass die Höhe der ersten Abschnitte kleiner als die Höhe der zweiten Abschnitte ist.

9. Binärer optischer Schalter nach Anspruch 8,
**dadurch gekennzeichnet, dass** die Breite der zweiten Abschnitte geringer als die Breite der ersten Abschnitte ist.

10. Binärer optischer Schalter nach Anspruch 5,
**dadurch gekennzeichnet, dass** der adiabatische Übergang zwischen den ersten Abschnitten, die durch eine Technik eines geätzten Streifens ausgeführt sind, und den zweiten Abschnitten ausgeführt ist, die durch eine Technik eines eingebetteten Streifens ausgeführt sind.

11. Binärer optischer Schalter nach Anspruch 5,
**dadurch gekennzeichnet, dass** der adiabatische Übergang zwischen den ersten Abschnitten und den zweiten Abschnitten ausgeführt ist, wobei alle beide durch eine Technik eines eingebetteten Streifens ausgeführt sind.

12. Binärer optischer Schalter nach einem der vorstehenden
Ansprüche,
**dadurch gekennzeichnet, dass** mindestens die ersten Abschnitte in mehrfachen Quantentöpfen ausgeführt sind.

13. Vielzahl binärer optischer Schalter nach mindestens
einem der vorstehenden Ansprüche,
**dadurch gekennzeichnet, dass** diese Schalter untereinander verbunden sind, um eine Schaltmatrix zu bilden.

## Claims

1. A digital optical switch including an input optical guide (PME) and first and second output optical guides (PHD, PHG), said guides being mutually disposed in accordance with a bifurcation having the shape of the letter "Y", said first and second output guides (PHD, PHG) each including at least a first portion (Z6, Z7) disposed at one end of said input guide (PHE) and a second portion (Z8) disposed at one end of said first portion (Z6, Z7), said first and second portions being coupled by a transition (PMG, PMD) disposed in a transition region (Z7), and means for applying an electrical control signal that produces a refractive index difference between said respective first portions of said first and second output guides, which switch is **characterized in that** the opto-geometrical parameters of at least one of said two output optical guides are selected so that said guide has, in a plane containing said output guides, a narrower guided propagation mode in said second portion than in said first portion of the respective output guide.

2. A digital optical switch including two input optical guides (HENG, HEND) and first and second output optical guides (MGNX, MDNX), said guides being mutually disposed in accordance with a crossover having the shape of the letter "X", said first and second output guides each including at least a first portion (Z6, Z7) disposed at one end of said input guides (HENG, HEND) and a second portion (Z8) disposed at one end of said first portion (Z6, Z7), said first and second portions being coupled by a transition disposed in a transition region (Z7), and means for applying an electrical control signal that produces a refractive index difference between said respective first portions of said first and second output guides, which switch is **characterized in that** the opto-geometrical parameters of at least one of said two output optical guides are selected so that said guide has, in a plane containing said output guides, a narrower guided propagation mode in said second portion than in said first portion of the respective output guide.

3. A digital optical switch according to either claim 1 or claim 2, **characterized in that** said transition is produced between a first portion having a refractive index n, and a second portion having a refractive index n₂ > n₁.

4. A digital optical switch according to claim 3, **characterized in that** said transition between said first and second portions with indices n₁, n₂ is obtained by butt jointing.

5. A binary optical switch according to either claim 1 or claim 2, **characterized in that** said transition is an adiabatic transition.

6. A digital optical switch according to claim 5, **characterized in that** said adiabatic transition is produced by an etching technique.

7. A digital optical switch according to claim 6, **characterized in that** said etching technique consists in etching to a greater depth in the region of said second portion than in the region of said first portion of said output guides.

8. A digital optical switch according to either claim 1 or claim 2, **characterized in that** said first and second portions have respective physical dimensions transverse to the direction of propagation of light in said guides, referred to as their height and width, and **in that** said height of said first portions is less than said height of said second portions.

9. A digital optical switch according to claim 8, **characterized in that** said width of said second portions is less than said width of said first portions.

10. A digital optical switch according to claim 5, **characterized in that** said adiabatic transition is produced between said first portions, which are produced by an etched ridge technique, and said second portions, which are produced by a buried ridge technique.

11. A digital optical switch according to claim 5, **characterized in that** said adiabatic transition is produced between said first portions and said second portions, both of which are produced by a buried ridge technique.

12. A digital optical switch according to any preceding claim, **characterized in that** at least said first portions feature multiple quantum wells.

13. A plurality of digital optical switches according to at least one of the preceding claims, **characterized in that** said switches are interconnected to constitute a switching matrix.
